# EUROPEAN PATENT APPLICATION

(11) **EP 3 275 765 A1**
(43) Date of publication of application: **31.01.2018**
(21) Application number: 17182808.0
(22) Date of filing: 24.07.2017
(51) Int. Cl.: B62B 3/00, B62B 3/08, A47B 57/04, A47F 5/12

(54) **METHOD FOR CONFIGURING THE SHELVES OF A TRANSPORT TROLLEY**

(30) Priority: 29.07.2016 DK 201670567
(71) Applicant: ElmerPrint A/S, 7100 Vejle (DK)
(72) Inventor: VEST, Niels Verner Mogens, 8270 Højbjerg (DK)
(74) Representative: Patentgruppen A/S

(57) **Abstract**

The invention relates to a method for configuring the shelves (6) and shelf carrying posts (5) of a transport trolley (1), said transport trolley (1) comprising a base trolley unit (2) with wheels (4) and upward facing receptors (3), vertical posts (5) mountable in said receptors (3), and shelves (6), said method comprising the steps of:
entering pins (27) of a cross bar (26) in a configuring tool (25) into opposite openings (8) of two posts (5),
engaging a recess (31) of a further arm (30) in the configuring tool (25) with an edge (23) projecting up from the base trolley unit (2),
lowering one end of a lever arm (28) in the configuring tool (25) connected at the opposite end to the cross bar (26) and to the further arm (30) in a pivot point (32) in order to lift said two posts (5) up, and
securing said two posts (5) in a new position within the receptors (3) e.g. with lock pins (35) entered through holes (33, 34) in the receptors (3) and posts (5).

## Description

### Field of the invention

The invention relates to a method for configuring the shelves and shelf carrying posts of a transport trolley for green plants such as flowers or herbs.

### Background of the invention

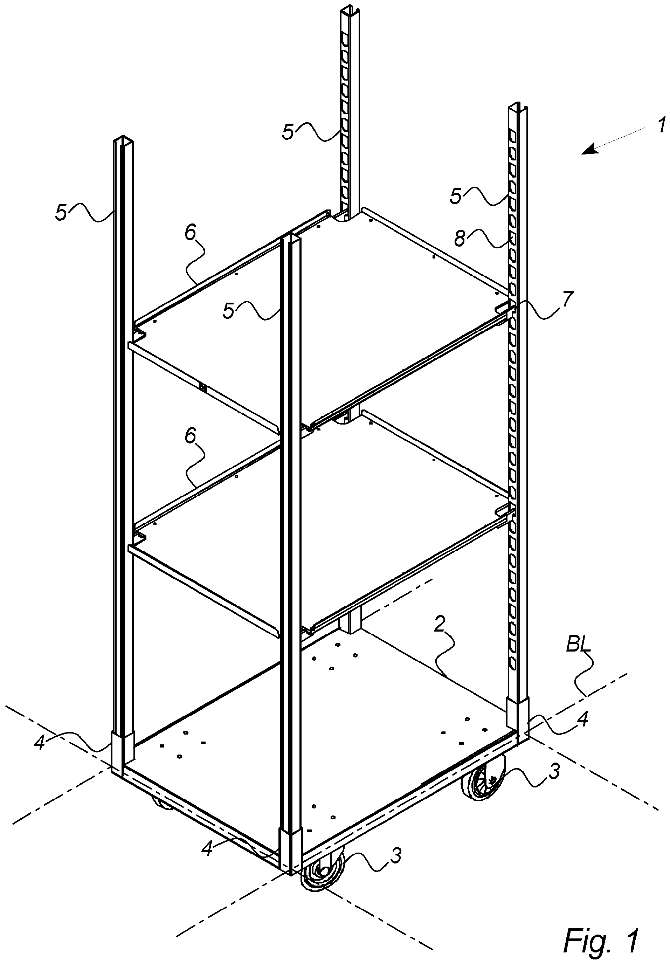

Transport trolleys for transporting, storing and presenting green plants usually have a base trolley unit with a rectangular base defining a base level. The base trolley unit also has four corner wheels and four corner square tube receptors mounted on the base from below and above, respectively, as illustrated in Fig. 1.

Each of the four corner square tube receptors faces up and has an opening for receiving a vertical square tube corner post of a slightly lesser side dimensions than the receptor.

One side of the square tubes have a number of openings for receiving fasteners of one or more shelves. The shelves may carry and present green plants such as flowers or herbs in pots or similar containers.

The transport trolleys may be wrapped in a plastic film or other protection means by a wrapper machine after the green plants have been loaded onto the shelves e.g. in a nursery. The plastic wrapped transport trolleys are loaded into vehicles and transported to shops, garden centres or other sales places for green plants e.g. over long distances with significant amount of transport time. Unwrapped transport trolleys are hereafter wheeled to the right sales positions and customers may pick the desired green plants from the shelves.

The green plants loaded on the shelves of a transport trolley also represent a significant amount of weight in a height above base level of the transport trolley.

It has hereby been realised that further solutions adding stability, flexibility and versatility to the well-known transport trolleys are necessary in order to safely and easily cope with the significant challenges for transport trolleys during transport and presentation of green plants.

Furthermore, to ensure that the green plants are presented on the shelves as well as possible, it is from European patent application EP 1 093 741 A1 know to provide a tool, by means of which a post may be lifted and secured in a new position. By lifting two posts in this manner all the shelfs are tilted so that the plants on the shelfs are better presented and will easily slide towards the front edge. However, the method presented in EP 1 093 741 A1 is complex and time consuming.

Accordingly, it is an object of the invention to provide for a method for configuring the shelves of a transport trolley in a fast and efficient manner.

### Summary of the invention

The invention relates to a method for configuring the shelves and shelf carrying posts of a transport trolley for green plants such as flowers or herbs. The transport trolley comprises a base trolley unit defining a horizontal base level with wheels underneath and upward facing receptors, vertical or substantially vertical posts mountable in said receptors, and shelves for carrying said green plants and supported between said posts e.g. by shelf pins or hooks entering holes in side walls of the posts, wherein at least one further support structure is mounted on the base unit above and/or below said base level. The method comprises the steps of:
entering pins of a cross bar in a configuring tool into opposite openings of two posts located in said receptors of a base trolley unit in the transport trolley,
engaging a recess of a further arm in the configuring tool with an edge projecting up from the base trolley unit,
lowering one end of a lever arm in the configuring tool connected at the opposite end to the cross bar and to the further arm in a pivot point in order to lift said two posts up, and
securing said two posts in a new position within the receptors e.g. with lock pins entered through holes in the receptors and posts.

Hereby is it possible to provide a stable, flexible and versatile transport trolley during transport, storage and presentation of green plants, wherein by means of a configuring tool, it is possible to define a support structure as a stable and flexible foundation for configuring the shelves in the unit with use of the tool. By, a side wall of at least one of said receptors and posts in the lower end comprise one or more through-going holes for locking receptors and posts with a lock pin in a configured position using a configuring tool, it is also possible to conclude the configuring of the shelves in a secure and versatile manner.

Furthermore, by lifting two posts at a time the shelves are fast and efficiently tilted in the correct angle.

In a further embodiment, the shelves and posts are configured with the tool to be lifted up with an angle between 5 and 25° such as between 10 and 20° e.g. approx. between 13 to 15°.

If the angle is too little not all the plants on the shelves can be seen and if the angle is too big, the risk of the plants falling of the shelves is increased. Thus, the present angle ranges present an advantageous relationship between functionality and safety.

By, said base trolley unit has a rectangular base defined by boundaries of short and long sides, an advantageous embodiment of the invention has been achieved.

In an embodiment, at least one further support structure includes the lower end of said receptors extending below said base level and being shaped as an inverse truncated pyramid e.g. with a four-sided opening, it is possible to improve the support structure for a post and especially reduce the risk of the post penetrating through the bottom of the receptor. In another embodiment, the edges of said inverse truncated pyramid are welded connections, whereby the post penetration risk is further reduced in relation to any bent metal or spot welded solutions.

In an even further embodiment, said at least one further support structure includes wheel support structures for a set of rotatable wheels and fixed wheels with edges stretching down from the base level and being in alignment with the lower edge of the short sides of the base trolley unit. Hereby, is a stable, flexible and versatile solution established with the wheel support structure having strong and rigid edges for handling the strains from transport trolley loads and from the strains in lift of the transport trolley e.g. by a pallet jack or a forklift.

By, one wheel support structure for a set of rotatable wheels or fixed wheels is positioned at a certain distance L1 from a short side of the boundaries in the base trolley unit and one wheel support structure for a set of rotatable wheels or fixed wheels is positioned at the other short side, it is possible to achieve a stable wheel configuration for the transport trolley by ensuring that the mutual wheel distances are not too different. If the mutual wheel distances are too different e.g. wheels close together within each set but with the sets being space far apart will make a transport trolley unstable and it may tumble e.g. when the transport trolley is being rotated by a wrapper machine in a plastic wrapping process. It is also possible to avoid damage by wheels exceeding the boundaries of the transport trolley. In another embodiment, the length L3 between the wheel support structures for a set of rotatable wheels and a set of fixed wheels being the same or substantially the same as width W3 between wheels in a set forming a quadratic or substantially quadratic rotatable and fixed wheel configuration underneath the base trolley unit, it is possible to establish an especially advantageous wheel configuration in providing a stable transport trolley.

By, said base trolley unit within base level boundaries includes one or more through-going holes for handling the unit by hand, it is easy for a person to handle a base trolley unit e.g. while stacking units on top of each other using the inverse truncated pyramid shaped receptors as guidance.

### Figures

Embodiments of the invention will be described, by way of example only with reference to the drawings, in which
- Fig. 1: shows a well-known transport trolley,
- Figs. 2a to 2c: show key elements of the transport trolley in Fig. 1,
- Figs. 3a to 3e: show a base trolley unit in a transport trolley with further support structures according to the invention,
- Fig. 3f: shows a schematic cross sectional view of the base trolley unit illustrated primarily in Figs. 3a and 3e,
- Figs. 4a and 4b: show a transport trolley according to the invention before and after a configuration tool for angling shelves is applied,
- Figs. 5a and 5b: show different use positions of the configuration tool for angling the shelves in a transport trolley according to the invention,
- Fig. 6: shows a first and second embodiment of a post for use in a transport trolley according to the invention,
- Fig. 7: shows method steps in angling the shelves of a transport trolley according to the invention using a configuration tool,
- Figs. 8a and 8b: show details of the base trolley unit for a transport trolley according to the invention including an upwardly facing receptor for receiving a post,
- Fig. 9: shows a stable of base trolley units for transport trolleys according to the invention, and
- Fig. 10: schematically shows the lifting with a pallet jack or forklift of two base trolley units being part of two transport trolleys according to the invention.

### Description of embodiments

Fig. 1 shows a well-known example of a transport trolley 1 for transporting, storing and presenting green plants. The trolley has a base trolley unit 2 with a rectangular base defining a horizontal base level BL. The base trolley unit also has four corner wheels 4 and four corner square tube receptors 3 mounted on the base trolley unit 2 from below and above, respectively.

Each of the four receptors 3 faces up and has an opening for receiving a vertical or substantially vertical square tube corner post 5 of a slightly lesser side dimensions than the receptor. The close dimensions of the receptor and post ensure that the post is kept in place in the receptor without further fastening means.

One side of the square tubes in the posts in a transport trolley has a number of openings 8 for receiving fasteners such as pins or hooks 7 of one or more shelves 6. The shelves may carry and present green plants such as flowers or herbs in pots or similar containers.

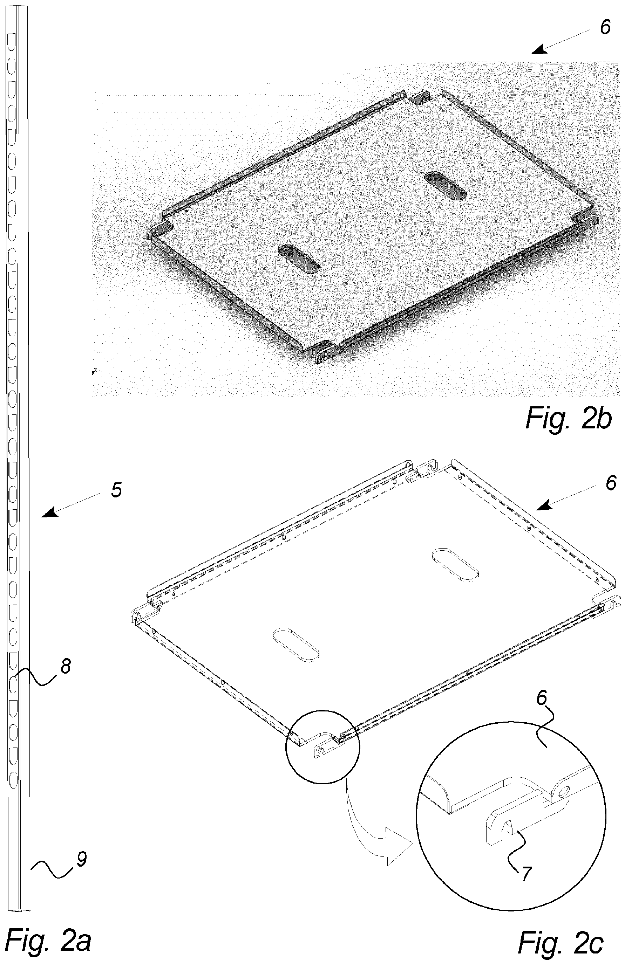

Figs. 2a to 2c show key elements of the well-known transport trolley 1 in Fig. 1 including a post 5 and shelf 6 for use in the transport trolley.

The post 5 in Fig. 2a is illustrated as having openings 8 in one side but with a lower part 9 of the post being without openings. The lower part 9 of the post 5 is the mountable part in an upward facing receptor 3.

The shelf 6 in Figs. 2b and 2c is illustrated as having shelf pins or hooks 7 in the four corners for entering openings 8 in the posts 5 such as the illustrated post openings in Fig. 2a.

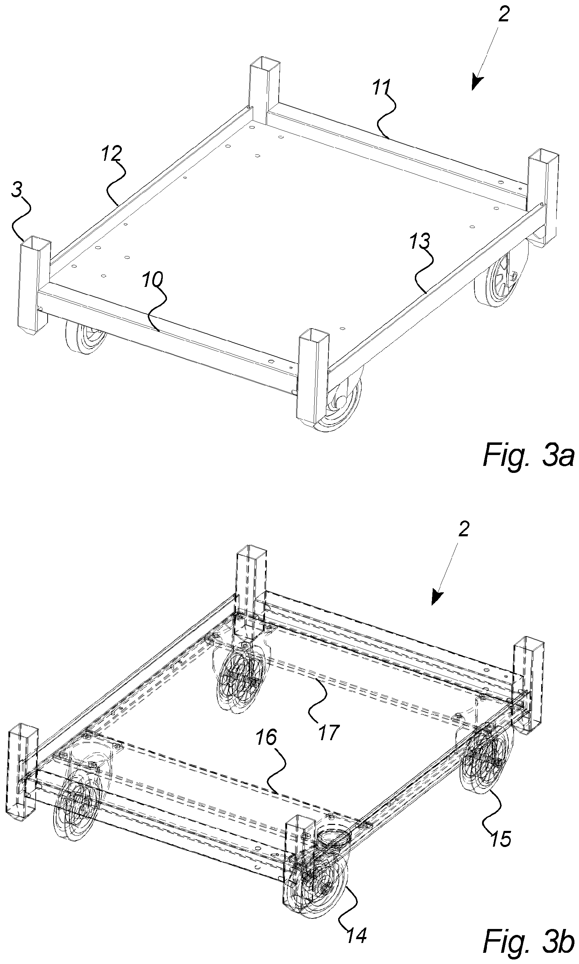

Figs. 3a to 3f show an embodiment of a base trolley unit 2 for a transport trolley 1 with further support structures according to the invention.

Fig. 3a shows the base trolley unit 2 with a first and second short side 10, 11 as well as a first and second long side 12, 13 defining the boundaries of the base together with the receptors 3 in the corners. The first and second short side 10, 11 are made in four sided / square tubes and the first and second long side 12, 13 are made in V-shaped steel profiles with an edge projecting up from a base level.

Fig. 3b shows the wheel positions underneath the base trolley unit 2 wherein one set of fixed wheels 15 is mounted on a support structure 17 for the fixed wheels. The support structure 17 and set of fixed wheels 15 are located in close proximity of the second short side 11 and the structure stretches from long side to long side 12, 13. The two wheels of the other set of wheels 14 are rotatable mounted on the support structure 16 for rotatable wheels and at least one of the two wheels is also provided with a brake which may prevent the wheel from rolling freely. The support structure 16 and set of rotatable wheels 14 are located in a certain distance from the first short side 10 and the structure stretches from long side to long side 12, 13.

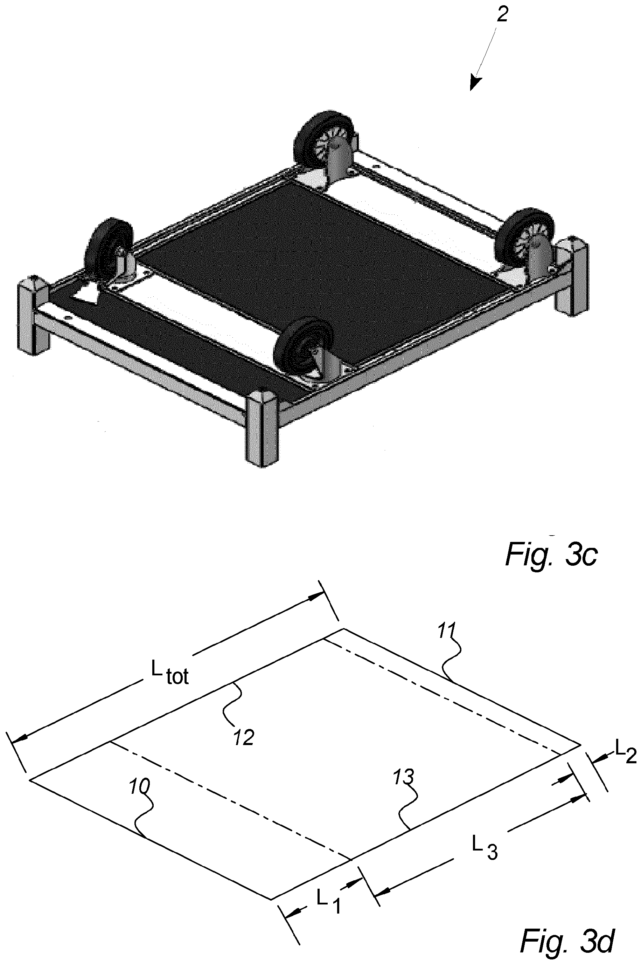

Fig. 3c shows further details of an embodiment with the wheels and support structures positioned underneath the base trolley unit 2. The rotatable wheels and the associated wheel support structure are moved a certain distance L1 away from the short side 10 to ensure that parts of the wheels will not rotate outside the boundaries of the base in the base trolley unit 2. Parts of rotational wheels outside the boundaries may rupture a plastic film wrapping of a transport trolley comprising the base trolley unit 2. A brake pedal of the brake in one or both rotatable wheels is included in defining the certain distance that the rotatable wheels are moved away from the short side 10 if the brake pedal exceeds the extend of the rotatable wheels.

Fig. 3d schematically shows the boundaries 10-14 of the rectangular base of the base trolley unit 2. Further, the Figure shows the center line of the support structure 16 for the rotatable wheels 14 and the center line of the support structure 17 for the fixed wheels 15.

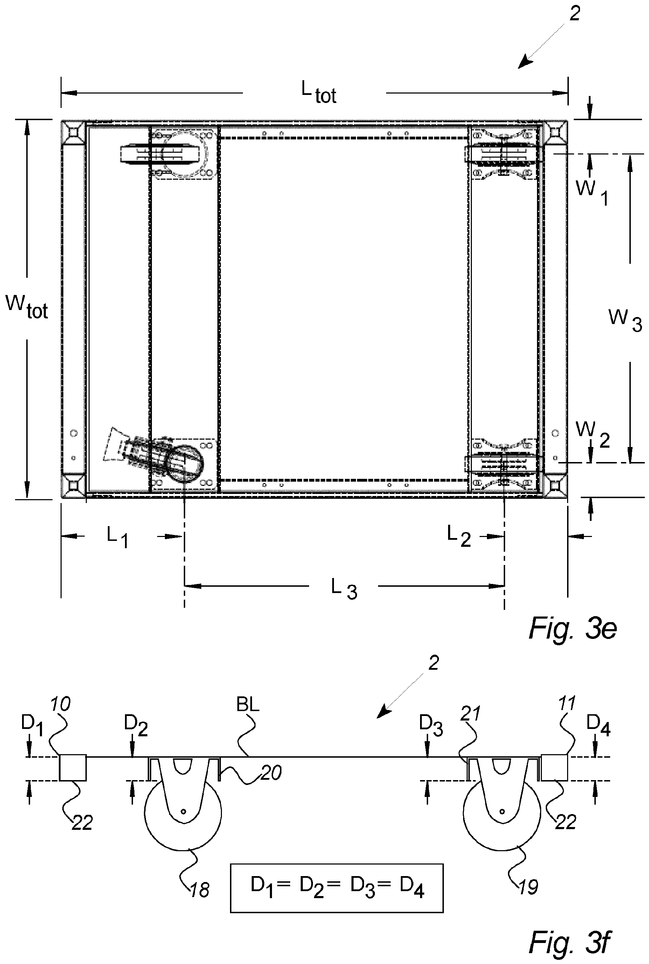

Fig. 3e also shows the boundaries of the rectangular base of the base trolley unit 2 but in more details.

The two Figures show that the length L2 is minimized as much as possible by positioning the support structure 17 and set of wheels 15 in close proximity with the second short side 11 in the boundaries of the base.

Fig. 3e shows that the widths W1 and W2 are also minimized as much as possible by positioning the fixed and rotational wheels 14, 15 in close proximity with the first and second long sides 12, 13 in the boundaries of the base.

The length L1 is chosen in the embodiment to have a size which ensures that the length L3 corresponds with the width W3 (i.e. L3 = W3) in forming a quadric wheel support structure.

Fig. 3e also shows that one of the rotatable wheels (lower left wheel in the Figure) includes a brake with a brake pedal in front of the wheel. The length of the brake pedal is shorter than the length L1 between the support structure 16 and the first short side 10 ensuring that the pedal does not exceeds the boundaries of the base.

Fig. 3f shows a schematic cross sectional view of the base trolley unit 2 e.g. a cross sectional view from the centre of the unit toward one of the long sides 12, 13. The support structures 16, 17 of the fixed and rotatable wheels 14, 15 are illustrated with downward bent edges 20 on both sides of the wheels 18, 19 as further support structures.

The distances D2 and D3 which the edges stretch down from the base level BL correspond and are in alignment with the distances D1 and D4 of the four sided tubes defining the first and second short side 10, 11 (i.e. distances D1 = D2 = D3 = D4).

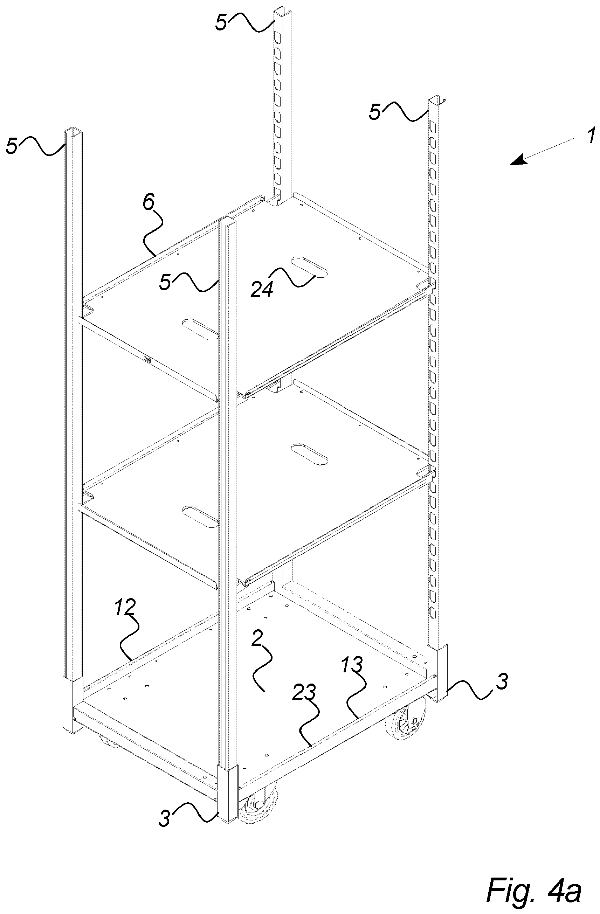

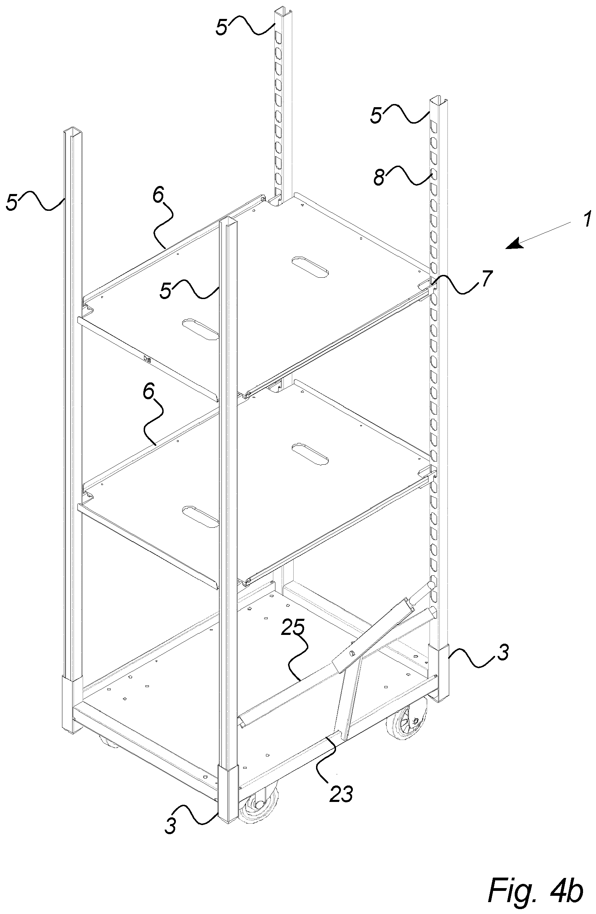

Figs. 4a and 4b show a transport trolley 2 according to the invention before and after a configuration tool 25 for angling shelves is applied.

Fig. 4a shows the transport trolley 2 with the two shelves 6 in a standard horizontal configuration between the four corner posts 5. The shelves 6 are illustrated with holes 24 for draining of any plant water and for handling the shelves by hand.

The base trolley unit 2 is especially illustrated with edges 23 as a further support structure projecting up from the long sides 12, 13 of the unit.

Fig. 4b shows the transport trolley 2 with a configuring tool 25 ready for use in angling the shelves. The tool has a lever arm mounted with pins entering opposite openings in two posts and a further arm with a recess engaging with the edge 23 projecting up from the unit.

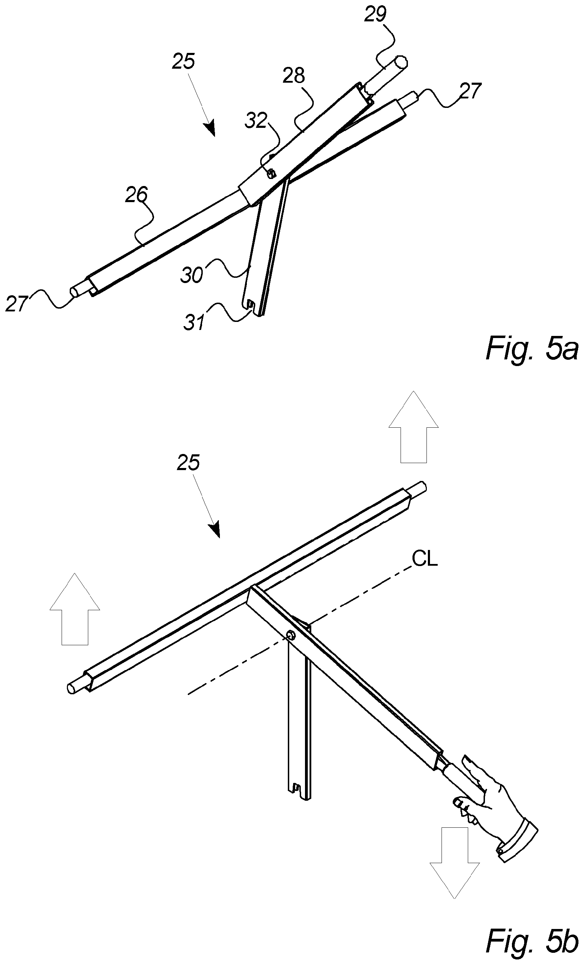

Figs. 5a and 5b show different use positions of the configuration tool for angling the shelves in a transport trolley according to the invention.

Fig. 5a shows a configuring tool 25 for angling shelves of a transport trolley 2 (not shown in the Figure). The tool comprises a cross bar 26 with pins 27 at the ends for entering into the holes in side walls of two vertical or substantially vertical posts in the transport trolley. A lever arm 28 is connected at one end to the centre of the cross bar in the configuring tool and has a handle 29 at the opposite end. A fulcrum arm 30 in the configuring tool has a recess 31 in one end to interact with the edge 23 projecting up from the long side of the base trolley unit and is connected in a pivot point 32 to the lever arm 28 establishing a centre line for the rotational movement of the lever arm.

As illustrated in Fig. 5b it is possible to lift the vertical posts and the suspended shelves up with the configuring tool 25 by lowering the handle by hand and vice versa as the fulcrum arm and base trolley unit act as a fixed hinge for the lever arm.

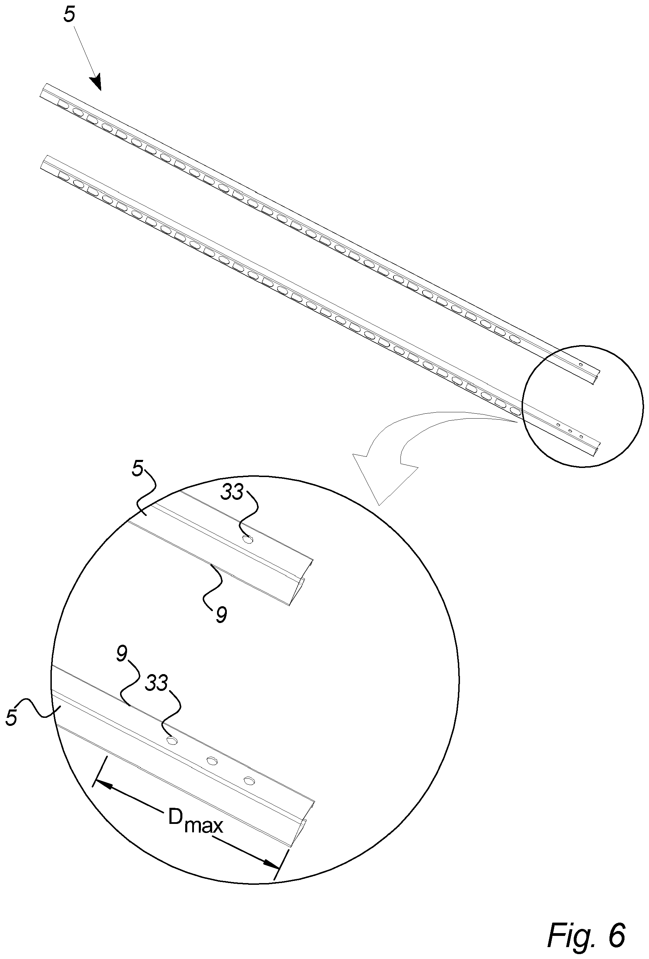

Fig. 6 shows a first and second embodiment of a post 5 for use in a transport trolley according to the invention.

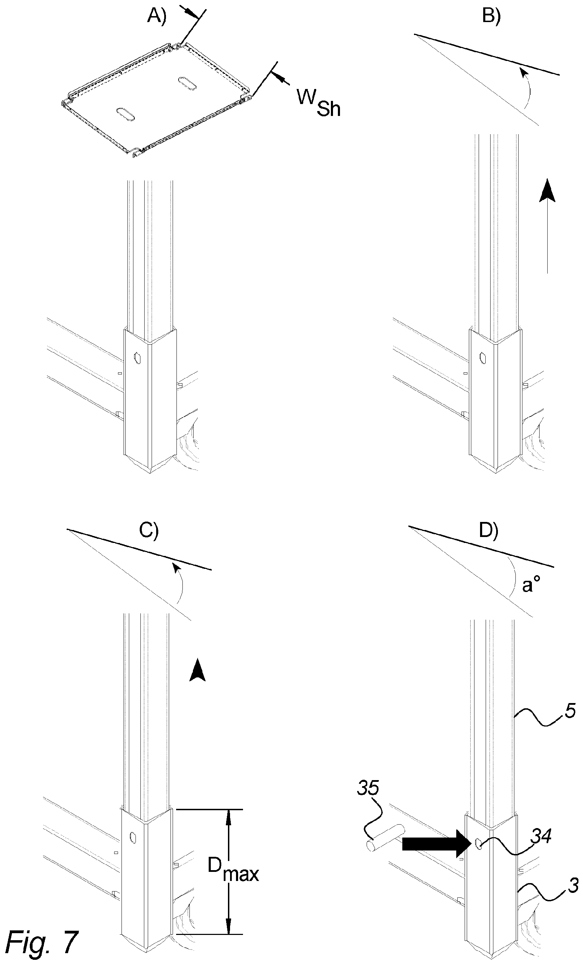

The embodiments of the post 5 is illustrated with one and three through going holes 33 in the lower part 9 of the post 5. The through going holes 33 allow the post to be locked in one or more positions within a receptor having full length of Dmax which will be further explained below in connection with Fig. 7.

Fig. 7 shows method steps A-D) in angling the shelves 6 of a transport trolley according to the invention using a configuring tool.

Method step A) is illustrated with a shelf having a width Wsh between the pins or hooks suspending the shelf between two posts. Step A) is also illustrated with a partial view of a receptor and accompanying post in a transport trolley.

Method step B) is illustrated with the partial view of the receptor and accompanying post but with the post being lifted up in relation to the receptor by the configuring tool (as indicated with the vertical arrow). The illustrated lifted post (and the other post which has also been lifted with the configuring tool but is not illustrated in the present Figure) ensures that the shelves are angled in relation to the posts which are not lifted by the configuring tool (as indicated with the angle symbol).

Method step C) is illustrated with the partial view of the receptor and accompanying post wherein the post is lifted less than the distance Dmax corresponding to the length of receptor to ensure that the post is not lifted out of the receptor.

Method step D) is illustrated with the partial view of the receptor and accompanying post wherein the shelves are angled at the desired angle a° wherein a hole in the post and in the receptor 34 also are in alignment. A pin 35 for locking the post in the receptor in the angled shelf configuration is entered through the hole in the receptor and in the post.

It is hereby possible to lift posts of a transport trolley with the configuring tool and lock the trolley shelves in an angle a° with the method steps A to D).

The distance Dmax and the width Wsh may be approx. 160 and 570 millimetres in an embodiment of the invention which suggests a maximum shelves angle a° of approx. 16° in the embodiment. However, smaller or larger angles are also possible by changing the distance and/or width in order to achieve water drainage from the shelves and in presenting the green plants advantageously for customers. An angle between 5 and 25° for the shelves is preferred and especially between 10 and 20° such as approx. 13 to 15°.

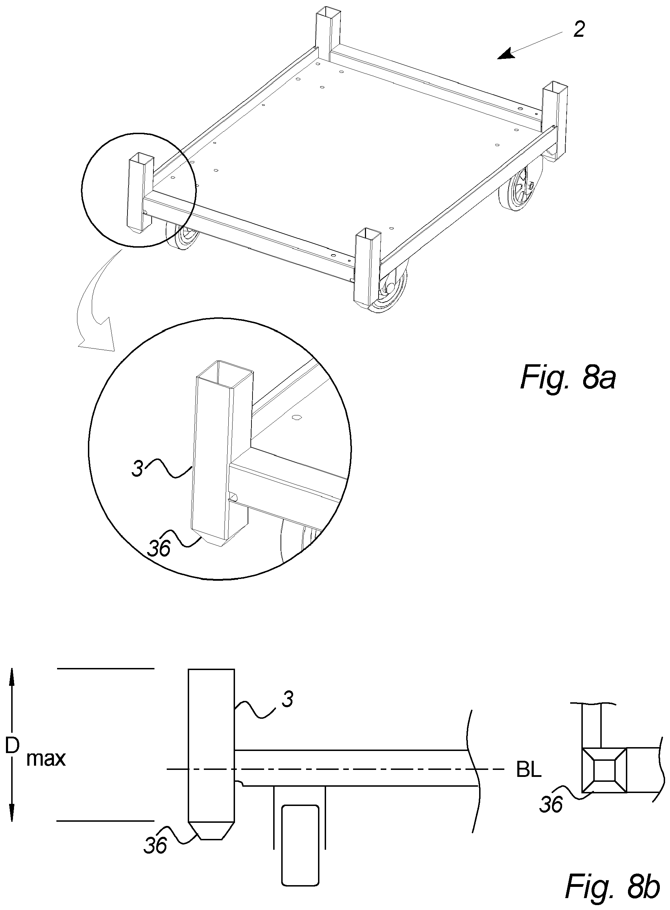

Figs. 8a and 8b show details of the base trolley unit for a transport trolley according to the invention including an upwardly facing receptor for receiving a post.

Fig. 8a and especially the enlargement shows an embodiment of the corner receptor 3 wherein the receptor continues underneath base level BL of the base trolley unit 2 as a further support structure. The lower end of the receptor 3 is preferably shaped an inverse truncated pyramid 36.

Fig. 8b shows the inverse truncated pyramid 36 in more details included a view from beneath illustrating the central four sided opening in the truncated pyramid 36 allowing water to run through the receptor 3 and leave via the opening as the pyramid edges are welded firmly together.

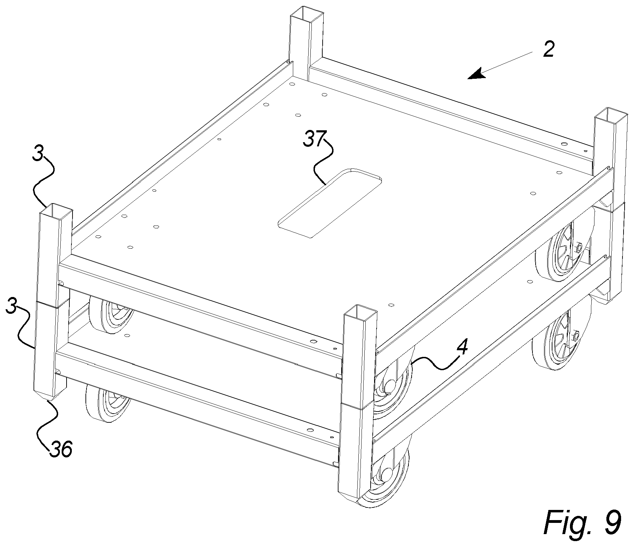

The inverse truncated pyramid 36 in each receptor 3 of the base trolley unit 2 also allow base trolley units 2 to be stacked on top of each other as will be explained in connection with Fig. 9.

Fig. 9 shows a stable of base trolley units 2 for transport trolleys according to the invention.

A number of the base trolley units 2 may be stabled when not in use to save space. The diameter of the wheels in a base trolley unit is smaller than the length of two receptors entered into each other as illustrated in the Figure which allows base trolley units to be stabled on top of each other in a steady stable e.g. of a height of 1-2 meters.

A base trolley unit may weight more than 10 kilograms and have a rectangular shape which may makes the unit difficult to handle by one person. The base trolley unit of the invention is hereby provided one or more holes 37 for handling the unit by hand of the one person e.g. in stacking more units on top of each other.

The base trolley unit in the Figure is illustrated with one centrally located hole 37 with an oblong shape but the number of holes, the shapes of holes and the location of holes in the units may be altered to fit any specific application of the units.

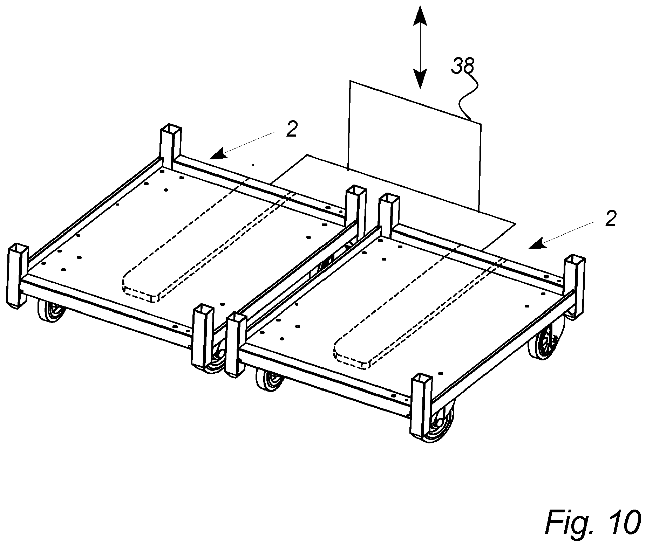

Fig. 10 schematically shows the simultaneous lifting with a pallet jack or forklift 38 of two base trolley units 2 of two transport trolleys according to the invention.

Each fork in the pallet jack or forklift 38 is entered underneath a base trolley unit 2 of a transport trolley (not shown in the Figure) wherein the units are positioned next to each other with one long side of a unit in close proximity with the corresponding long side of the other unit.

The forks lift evenly underneath both units at all or most surfaces having the same distances D1 to D4 from the base level as described in connection with Fig. 3f. The two forks are spaced longer apart than the distance between the center of masses in the two units ensuring that the units will only lean against each other when lifted.

The two transport trolleys with green plants carried by shelves (not shown in the Figure) will usually be wrapped individually in plastic film by a wrapper machine before being lifted as a common unit by the pallet jack or forklift 38 e.g. up and into a truck or a similar vehicle for a longer transport to a sales location of the green plants.

In the above description, various embodiments of the invention have been described with reference to the drawings, but it is apparent for a person skilled within the art that the invention can be carried out in an infinite number of ways, using e.g. the examples disclosed in the description in various combinations, and within a wide range of variations within the scope of the appended claims.

### References

- 1.: Transport trolley for green plants
- 2.: Base trolley unit of a transport trolley
- 3.: Receptors facing upwards from the base unit
- 4.: Wheels underneath the transport trolley
- 5.: Vertical or substantially vertical post mountable in the receptors
- 6.: Shelves for carrying green plants
- 7.: Shelf pins or hooks
- 8.: Holes in side wall of vertical or substantially vertical post
- 9.: Lower part of a post mountable in an upward facing receptor
- 10 and 11.: First and second short side of the base trolley unit
- 12 and 13.: First and second long side of the base trolley unit
- 14.: Set of rotatable wheels
- 15.: Set of fixed wheels
- 16.: Support structure for the rotatable wheels
- 17.: Support structure for the fixed wheels
- 18.: Rotatable wheel
- 19.: Fixed wheel
- 20.: Frame walls in the support structure for the rotatable wheels
- 21.: Frame walls in the support structure for the fixed wheels
- 22.: Square tubes in the first and second short side of the base trolley unit
- 23.: Edges projecting up from the long sides of the base trolley unit
- 24.: Holes in shelves for draining of plant water and for handling the shelves
- 25.: Configuring tool for angling the shelves of the transport trolley
- 26.: Cross bar in the configuring tool
- 27.: Pins for entering into the holes in side walls of two vertical or substantially vertical posts in the transport trolley
- 28.: Lever arm in the configuring tool
- 29.: Handle for the configuring tool
- 30.: Fulcrum arm in the configuring tool
- 31.: Recess to interact with the edge projecting up from the long side of the base trolley unit
- 32.: Pivot point of the configuring tool
- 33.: Holes in the lower part of a post
- 34.: Hole in the receptor for a post
- 35.: Pin for locking a post in a receptor using the through-going holes in the post and receptor
- 36.: Lower end of a receptor shaped as an inverse truncated pyramid with a four-sided opening
- 37.: One or more holes in base trolley unit for handling the unit e.g. in stacking more units on top of each other
- 38.: Forklift for lifting a transport trolley or two transport trolleys arranged side by side

- a°.: Angle a
- BL.: Base level of a transport trolley
- CL.: Centre line
- D.: Distance
- L.: Length
- W.: Width

## Claims

1. Method for configuring the shelves (6) and shelf carrying posts (5) of a transport trolley (1) for green plants such as flowers or herbs, said transport trolley (1) comprising a base trolley unit (2) defining a horizontal base level (BL) with wheels (4) underneath and upward facing receptors (3), vertical or substantially vertical posts (5) mountable in said receptors (3), and shelves (6) for carrying green plants and supported between said posts (5) by shelf pins or hooks (7) entering holes (8) in side walls of the posts, wherein at least one further support structure is mounted on the base trolley unit (2) above and/or below said base level (BL), said method comprising the steps of:
entering pins (27) of a cross bar (26) in a configuring tool (25) into opposite openings (8) of two posts (5) located in said receptors (3) of a base trolley unit (2) in the transport trolley (1),
engaging a recess (31) of a further arm (30) in the configuring tool (25) with an edge (23) projecting up from the base trolley unit (2),
lowering one end of a lever arm (28) in the configuring tool (25) connected at the opposite end to the cross bar (26) and to the further arm (30) in a pivot point (32) in order to lift said two posts (5) up, and
securing said two posts (5) in a new position within the receptors (3) e.g. with lock pins (35) entered through holes (33, 34) in the receptors (3) and posts (5).

2. Method according to claim 1 where the shelves (6) and posts (5) are configured with the tool (25) to be lifted up with an angle (a°) between 5 and 25° such as between 10 and 20° e.g. approx. between 13 to 15°.

3. Method according to claim 1 or 2, wherein said base trolley unit (2) has a rectangular base defined by boundaries of short and long sides (10-13).

4. Method according to any of claims 1-3, wherein at least one further support structure includes the lower end of said receptors (3) extending below said base level and being shaped as an inverse truncated pyramid (36) e.g. with a four-sided opening.

5. Method according to any of claims 1-4, wherein the edges of said inverse truncated pyramid (36) are welded connections.

6. Method according to any of claims 1-5, wherein said at least one further support structure includes at least one edge (23) projecting up from the long sides (11, 12) of the base trolley unit (2) such as along the base level boundaries of the unit for receiving a configuring tool (25).

7. Method according to any of claims 1-6, wherein a side wall of at least one of said receptors (3) and posts (5) in the lower end (9) comprise one or more through-going holes (33, 34) for locking receptors and posts with a lock pin in a configured position using a configuring tool (25).

8. Method according to any of claims 1-7, wherein said at least one further support structure includes wheel support structures for a set of rotatable wheels and fixed wheels (16, 17) with edges (20,21) stretching down from the base level (BL) and being in alignment with the lower edge (22) of the short sides (10, 11) of the base trolley unit (2).

9. Method according to any of claims 1-8, wherein one wheel support structure for a set of rotatable wheels or fixed wheels (16, 17) is positioned at a certain distance L1 from a short side (10, 11) of the boundaries in the base trolley unit (2) and one wheel support structure for a set of rotatable wheels or fixed wheels (16, 17) is positioned at the other short side (10, 11).

10. Method according to claim 9, wherein the length L3 between the wheel support structures for a set of rotatable wheels and a set of fixed wheels (16, 17) being the same or substantially the same as width W3 between wheels in a set forming a quadratic or substantially quadratic rotatable and fixed wheel configuration underneath the base trolley unit (2).

11. Method according to any of claims 1-10, wherein said base trolley unit (2) within base level boundaries includes one or more through-going holes (37) for handling the unit by hand.
